# FASCICULE DE BREVET EUROPEEN

(11) **EP 3 117 640 B1**
(45) Date de publication et mention de la délivrance du brevet: **29.08.2018**
(21) Numéro de dépôt: 15713995.7
(22) Date de dépôt: 09.03.2015
(51) Int. Cl.: H04W 8/18, H04W 8/04

(54) **MODULE D'IDENTITÉ DE SOUSCRIPTEUR EMBARQUE APTE A GÉRER DES PROFILS DE COMMUNICATION**
EINGEBETTETES TEILNEHMERIDENTITÄTSMODUL ZUR VERWALTUNG VON KOMMUNIKATIONSPROFILEN
EMBEDDED SUBSCRIBER IDENTITY MODULE CAPABLE OF MANAGING COMMUNICATION PROFILES

(30) Priorité: 14.03.2014 FR 1452152
(43) Date de publication de la demande: 18.01.2017
(73) Titulaire: IDEMIA France, 92700 Colombes (FR)
(72) Inventeur: WOZNIAC, Thomas, F-92700 Colombes (FR); LARIGNON, Guillaume, F-92700 Colombes (FR)
(74) Mandataire: Cougard, Jean-Marie
(86) Numéro de dépôt international: PCT/FR2015/050573
(87) Numéro de publication internationale: WO 2015/136200

(56) Documents cités:
- WO-A2-2011/036484
- "Reprogrammable SIMs: Technology, Evolution and Implications Final Report", , 25 septembre 2012 (2012-09-25), pages 1-95, XP055126567, Extrait de l'Internet: URL:http://stakeholders.ofcom.org.uk/binar ies/research/telecoms-research/reprogramma ble-sims.pdf [extrait le 2014-07-02]

## Description

### Arrière-plan de l'invention

La présente invention porte sur un module d'identité de souscripteur embarqué appelé aussi carte eUICC (pour « *embedded Universal Integrated Circuit Chip* »), et concerne plus particulièrement une carte eUICC apte à réaliser de façon appropriée un traitement relatif à un profil de communication, tel qu'une opération d'activation ou de désactivation de profil par exemple.

De façon connue, une carte SIM est configurée pour permettre à un dispositif de communication (tel qu'un téléphone portable par exemple) avec laquelle elle est coopère d'utiliser le réseau de communication d'un seul opérateur de téléphonie. Pour ce faire, la carte SIM comprend notamment un identifiant unique IMSI (pour « *International Mobile Subscriber Identity* ») associé à une souscription particulière d'un utilisateur avec un opérateur de téléphonie mobile donné.

Lorsqu'un téléphone portable souhaite utiliser les services d'un réseau de communication, il envoie l'identifiant IMSI de sa carte SIM au réseau afin de s'identifier auprès de ce dernier. Pour s'authentification auprès du réseau, le téléphone portable envoie en outre une clé secrète contenue dans la carte SIM. L'opérateur vérifie à l'aide d'une base de données HLR (pour « *Home Location Register* ») que l'utilisateur a bien souscrit au service demandé et, dans l'affirmative, autorise l'accès au téléphone portable en question.

Traditionnellement, les données de souscription (identifiants, clés, algorithmes...) propres à l'opérateur ayant émis la carte SIM sont stockées de façon permanente dans une mémoire morte de la carte SIM de sorte que la carte SIM ne soit pas reprogrammable. Cela permet en particulier de réduire les risques de fraudes vis-à-vis de l'identité de l'utilisateur en rendant plus difficile la modification ou la duplication de la carte SIM ou de ses données de souscription.

Par conséquent, la seule manière pour un utilisateur de changer d'opérateur de téléphonie mobile est généralement de remplacer manuellement dans son téléphone portable sa carte SIM actuelle par une nouvelle carte SIM émise par un nouvel opérateur de son choix. Cette nouvelle carte SIM contient les données de souscription nécessaires pour accéder au réseau et aux services propres au nouvel opérateur.

L'émergence des cartes SIM reprogrammables, et en particulier des modules d'identité de souscripteur embarqués (appelés aussi cartes eUICC comme indiqué ci-avant), permet à son utilisateur de changer d'opérateur sans avoir à remplacer physiquement la carte SIM dans le téléphone portable. Les principales caractéristiques d'une carte eUICC sont définies dans le document intitulé « Reprogrammable SIMs : Technology, Evolution and Implications - Final Report » daté du 25 septembre 2012 (CSMG). Ce document, dressé par l'organisme GSMA (pour « *Global System for Mobile Communications Association* »), définit une carte eUICC comme un élément matérielle sécurisé de petite taille pouvant être soudé dans un terminal mobile afin de mettre en oeuvre les fonctions d'une carte SIM traditionnelle.

En particulier, une carte eUICC est apte à contenir un profil de communication qui, lorsqu'il est actif, permet au téléphone portable d'accéder de façon sécurisée au réseau d'un opérateur et aux services définis par le profil en question. En changeant le profil de communication actif dans la carte eUICC, il est en outre possible de changer d'opérateur ou de modifier l'accès à des services associés (e.g. services voix ou de données).

L'utilisation d'une carte eUICC est notamment avantageuse lorsqu'il est difficile de remplacer physiquement une carte SIM traditionnelle et, plus généralement, lorsqu'on souhaite basculer facilement d'un opérateur à un autre.

Cependant, la spécification et la standardisation en ce qui concerne le fonctionnement et l'architecture d'une carte eUICC sont toujours en cours de développement et appellent à des améliorations. En particulier, il n'existe pas actuellement de solution satisfaisante pour gérer l'activation ou la désactivation d'un profil de communication dans une carte eUICC. Plus généralement, il existe un besoin pour une solution permettant à une carte eUICC de gérer efficacement des profils de communication. WO2011/036484 A2 décrit un IMSI broker qui est un serveur dans un réseau de téléphonie. Il est utilisé pour transmettre des IMSI et des données de sécurité aux terminaux en itinérance. Un terminal itinérant reçoit du serveur une IMSI locale qui va permettre au terminal de se connecter au réseau local avec un profil local. Si le terminal ne réussit pas à se connecter par ce profil, il va utiliser son profil initial.

Le document "Reprogrammable SIMs : Technology, Evolution and Implications - Final Report" publié par CSMG le 25 septembre 2012 décrit l'état de l'art pour les cartes SIM reprogrammables. Il décrit des serveurs réseau utilisés dans la gestion des cartes SIM reprogrammables.

### Objet et résumé de l'invention

L'invention est décrite dans les revendications. Les mises en oeuvres et exemples de la description qui ne sont pas couverts par les revendications sont considérés comme ne faisant pas partie de la présente invention. A cet effet, la présente invention concerne un module d'identité de souscripteur embarqué apte à coopérer avec un dispositif de communication, le module d'identité de souscripteur embarqué comprenant :
- au moins un profil de communication configuré pour permettre au module d'identité de souscripteur embarqué de communiquer, via le dispositif de communication, avec un réseau de téléphonie mobile lorsque ledit profil de communication est actif ;
- un module de réception apte à recevoir, depuis un serveur distant du réseau de téléphonie mobile, une requête de gestion de profil de communication ; et
- un module de gestion de profil configuré pour :
   o à réception de ladite requête de gestion, déterminer si au moins une règle est applicable parmi un ensemble prédéfini d'au moins une règle contenu en mémoire dans ledit module d'identité de souscripteur embarqué ;
   o et, dans l'affirmative, exécuter au moins une action spécifiée par ladite règle applicable en association avec un profil de communication dudit module d'identité de souscripteur embarqué.

La présente invention permet d'optimiser la gestion de profils de communication dans un élément sécurisé tel qu'un module d'identité de souscripteur embarqué à partir d'un ensemble d'au moins une règle susceptible d'être appliquée par le module de gestion de profil. La présente invention offre une grande flexibilité dans la gestion des profils de communication en fonction d'évènements détectés par l'élément sécurisé comme notamment des requêtes reçues en provenance d'opérateurs de téléphonique mobile. L'invention permet de déclencher des actions prédéfinies qui sont adaptées à chaque requête de gestion reçue, comme par exemple l'activation ou la désactivation d'un profil, la création ou suppression d'un profil ou encore le basculement d'un premier vers un deuxième profil.

Dans un mode de réalisation particulier, le module de gestion de profil est apte à consulter l'ensemble prédéfini d'au moins une règle afin de déterminer celles parmi ces règles qui sont applicables en réponse à la requête de gestion de profil de communication. Le module de gestion de profil est capable de traiter de façon appropriée la requête de gestion reçue en exécutant une ou plusieurs actions spécifiées par les règles applicables dans l'ensemble prédéfini.

Dans un mode de réalisation particulier, chaque profil de communication est contenu dans un domaine sécurisé dédié du module d'identité de souscripteur embarqué.

Dans un mode de réalisation particulier, ladite au moins une action spécifiée par ladite règle applicable comprend au moins l'un parmi :
- le déclenchement d'un basculement dudit profil de communication actif vers un second profil de communication déterminé ;
- le déclenchement de la désactivation dudit profil de communication actif ;
- le déclenchement de l'activation d'un second profil de communication ;
- la suppression de tout ou partie des données dudit profil de communication actif, lesdites données étant stockées dans une mémoire non volatile dudit module d'identité de souscripteur ;
- le déclenchement de la désactivation d'au moins une fonction dudit profil de communication actif ;
- le déclenchement d'un minuteur afin d'induire un délai d'attente déterminé entre la réception de ladite requête de gestion dudit profil, et la mise en oeuvre d'une partie au moins de ladite au moins une action ; et
- la notification à un serveur distant de la mise en oeuvre d'une action, par exemple une action de chargement, d'activation, de désactivation ou de suppression d'un profil de communication ou de toute ou partie des données d'un profil de communication.

En particulier, informer à l'avance le serveur distant de la réalisation à venir d'une action particulière (activation, désactivation, basculement de profils etc.) en lien avec un profil de communication est avantageux en ce que cela permet notamment à l'opérateur de téléphonie mobile correspondant de déclencher les opérations de gestion nécessaires relatives aux profils concernés au moment opportun (par exemple déclencher la suppression d'informations sensibles (clés cryptographiques, algorithmes etc.) contenues dans un profil sur le point d'être désactivé, avant la désactivation effective du profil P1).

Ladite au moins une fonction mentionnée ci-dessus comprend par exemple au moins l'une parmi une application de paiement sans contact et une application d'accès à des transports.

Dans un mode de réalisation particulier, le module de gestion de profil est configuré pour consulter une base de données de profils de communication, ladite base de données étant stockée dans une mémoire non-volatile réinscriptible du module d'identité de souscripteur embarqué, afin d'obtenir au moins une donnée supplémentaire permettant la mise en oeuvre de ladite au moins une action spécifiée.

Dans un mode de réalisation particulier, ladite base de données de profils comprend, en association avec chaque profil, au moins l'un parmi : un identifiant d'un profil de communication, un statut indiquant ledit profil de communication comme actif ou non actif, un pointeur vers l'adresse mémoire dudit profil et une adresse du serveur du fournisseur dudit profil.

Dans un mode de réalisation particulier, la requête de gestion requiert la désactivation du profil de communication actif, le module de gestion de profil étant configuré pour :
- déterminer, à partir de ladite base de données de profils de communications, une adresse dudit serveur distant du réseau de téléphonie associé au profil de communication actif ; et
- déclencher l'envoi d'une notification audit serveur distant en utilisant ladite adresse, afin d'informer le serveur distant du chargement, de l'activation, de la désactivation ou de la suppression d'un profil de communication ou de toute ou partie des données d'un profil de communication à venir.

Dans un mode de réalisation particulier, le module de gestion de profil est configuré pour déterminer, à partir de la base de données de profils, une application de notification,
le module de gestion de profil étant configuré pour envoyer une commande contenant ladite adresse à l'application de notification afin de déclencher l'envoi, par ladite application de notification, de la notification audit serveur distant.

Dans un mode de réalisation particulier, la notification (par exemple de désactivation) est envoyée au serveur distant via un message de type « *Short Message Service* » (SMS) ou « *Unstructured supplementary Service Data* » (USSD), ou via un message fondé sur le protocole « *Hypertext Transfert* », « *Card Application Toolkit Transfert Protocol* » (HTTPs/CAT TP) ou « *Bearer Independent Protocol* » (BIP).

Dans un mode de réalisation particulier, le serveur distant est un serveur SM-SR du réseau de téléphonie.

Dans un mode de réalisation particulier, le dispositif de communication est un terminal de téléphonie mobile. Alternativement, le dispositif de communication est un objet intelligent communiquant (communication intermachines dite « Machine-to-Machine » en anglais). L'objet intelligent communiquant est, par exemple, un compteur communiquant qui identifie la consommation énergétique d'un bâtiment, et la transmet automatiquement au travers d'un réseau de télécommunications à un distributeur.

La présente invention porte également sur un système comprenant un dispositif de communication et un module d'identité de souscripteur embarqué comme défini ci-avant, dans lequel le module d'identité de souscripteur embarqué est apte à coopérer avec le dispositif de communication pour communiquer avec le réseau de communication, le dispositif de communication étant par exemple un terminal de téléphonie mobile.

Corrélativement, l'invention concerne un procédé de gestion d'un profil de communication mis en oeuvre par un module d'identité de souscripteur embarqué apte à coopérer avec un dispositif de communication, le procédé comprenant :
- l'utilisation d'un profil de communication contenu dans le module d'identité de souscripteur embarqué pour communiquer via le dispositif de communication avec un réseau de téléphonie mobile lorsque ledit profil de communication est actif ;
- la réception d'une requête de gestion de profil de communication depuis un serveur distant du réseau de téléphonie mobile ;
- à réception de la requête de gestion, la détermination, par un module de gestion de profil, si au moins une règle est applicable parmi un ensemble prédéfini d'au moins une règle contenu en mémoire dans le module d'identité de souscripteur embarqué; et
- dans l'affirmative, l'exécution, par le module de gestion de profil, d'au moins une action spécifiée par ladite règle applicable en association avec un profil de communication du module d'identité de souscripteur embarqué.

Dans un mode de réalisation particulier, chaque profil de communication est contenu dans un domaine sécurisé dédié dudit module d'identité de souscripteur embarqué.

Dans un mode particulier de réalisation, les différentes étapes du procédé de gestion d'un profil de communication sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un élément sécurisé tel que module d'identité de souscripteur embarqué ou plus généralement par un processeur, ce programme comportant des instructions adaptées à la mise en oeuvre des étapes d'un procédé de gestion d'un profil de communication tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de manière schématique, l'architecture d'une carte eUICC conforme à un mode de réalisation particulier de l'invention, cette carte eUICC étant apte à coopérer avec un terminal mobile pour permettre l'accès à un réseau de téléphonie mobile ;
- la figure 2 représente, sous forme d'un ordinogramme, les principales étapes d'un procédé de gestion d'un profil de communication mis en oeuvre par la carte eUICC conformément à un mode de réalisation particulier de l'invention ; et
- la figure 3 représente, sous forme d'un ordinogramme, les principales étapes d'un procédé de gestion d'un profil de communication conformément à une variante du mode de réalisation de la figure 2.

### Description détaillée de plusieurs modes de réalisation

La présente invention porte sur un module d'identité de souscripteur embarqué appelé, et concerne plus particulièrement une carte eUICC apte à réaliser de façon appropriée un traitement relatif à un profil de communication, tel qu'une opération d'activation ou de désactivation de profil par exemple.

Comme déjà indiqué, on nommera plus simplement un module d'identité de souscripteur embarqué par l'appellation « carte eUICC » dans le présent document.

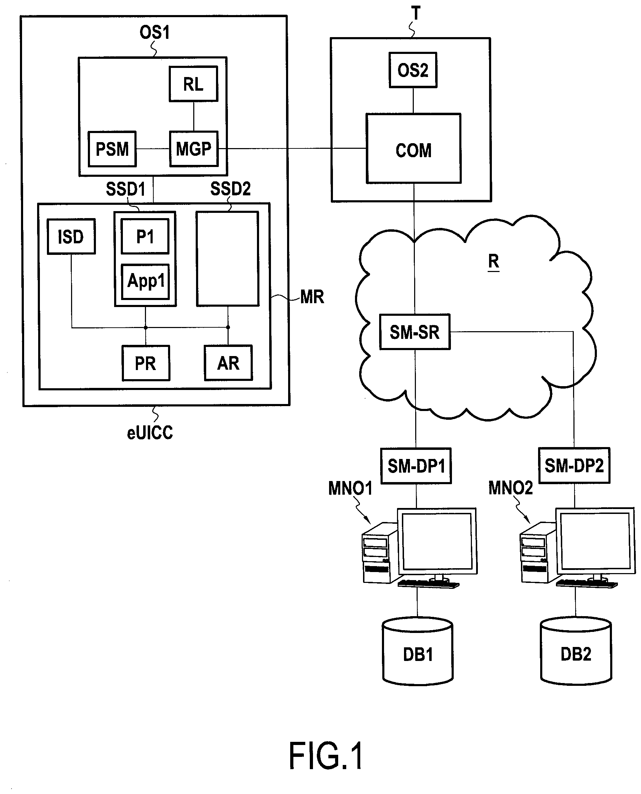

La **figure 1** représente, de manière schématique, l'architecture d'une carte eUICC conforme à un mode de réalisation particulier de l'invention, cette carte eUICC étant apte à coopérer avec un terminal de téléphonie mobile T pour permettre l'accès à un réseau de téléphonie mobile R. La carte eUICC est par exemple soudée ou intégrée dans le terminal T.

Bien que, dans ce document, les modes de réalisation de l'invention sont décrits en référence à un terminal de téléphonie mobile, l'invention s'applique plus généralement à un dispositif de communication apte à coopérer avec un élément sécurisé tel qu'une carte eUICC. Le dispositif de communication T peut par exemple être un objet intelligent communiquant comme déjà expliqué ci-avant, capable de communiquer via à un réseau de télécommunications avec une autre machine (e.g. un compteur de consommation énergétique d'un bâtiment apte à communiquer au travers d'un réseau de télécommunications avec un distributeur).

Dans le mode de réalisation décrit ici, le terminal mobile T peut utiliser la carte eUICC pour accéder de façon sécurisée au réseau R et à des services fournis par l'opérateur de téléphonie associé MNO1 ou MNO2 (appelé plus généralement MNO pour « *Mobile Network Operator* »).

Dans ce mode de réalisation particulier, le terminal mobile T comporte un système d'exploitation OS2 apte à contrôler notamment une interface de communication COM. Cette interface COM comprend par exemple, de façon connue, un émetteur/récepteur couplé à une antenne.

Dans le mode de réalisation décrit ici, la carte eUICC est un élément sécurisé comprenant notamment un système d'exploitation OS1 (stocké dans une mémoire morte par exemple) couplé à une mémoire non volatile réinscriptible MR.

Le système d'exploitation OS1 comprend un module logiciel PSM et un module de gestion de profil qui seront décrits plus en détail ultérieurement.

Par ailleurs, la mémoire non volatile MR comporte un domaine de sécurité privilégié ISD et des domaines de sécurité secondaires (SSD1 et SSD2 dans cet exemple). Chaque domaine de sécurité (ou domaine sécurisé) constitue un compartiment sécurisé de la carte eUICC.

Le domaine de sécurité ISD est privilégié en ce qu'il est apte en particulier, et comme de façon connue, à créer et supprimer des domaines de sécurité secondaires dans la mémoire non volatile MR, en coopération avec le module de gestion de profil MGP.

De plus, chaque domaine de sécurité secondaire SSD peut comporter un profil de communication (ou profil opérationnel) associé à un opérateur de téléphonie MNO particulier. De façon connue, un profil de communication peut comporter notamment des données de souscription (e.g. identifiants (IMSI etc.), clés cryptographiques, algorithmes (e.g. d'authentification)...). Un opérateur MNO ne peut accéder qu'au domaine de sécurité secondaire SSD qui lui est propre dans la carte eUICC.

Dans le mode de réalisation décrit ici, chaque profil de communication est contenu dans un domaine de sécurité dédié.

Dans l'exemple décrit ici, le domaine de sécurité secondaire SSD1 comporte un profil de communication P1 permettant, lorsqu'il est actif, au terminal T de communiquer dans un premier réseau mobile associé à l'opérateur de téléphonie MNO1. Le domaine SSD1 comprend en outre des applications APP1 propres à l'opérateur MNO1 auxquelles l'utilisateur a souscrit. Alternativement, les applications APP1 définies pour le profil P1 peuvent être contenues dans le profil P1 lui-même.

Le domaine de sécurité secondaire SSD2 est ici vide mais est également capable de contenir un profil de communication P2 permettant, s'il est actif, au terminal T de communiquer avec le réseau mobile de l'opérateur MNO2, ainsi que des applications APP2.

Par ailleurs, le module de gestion de profil MGP est apte à communiquer, par l'intermédiaire du terminal T (et en particulier de son interface COM), de façon sécurisée avec une entité distante SM-SR (pour « *Subscription Manager-Secure Routing* ») du réseau R afin de réaliser des actions prédéfinies en association avec un profil de communication (e.g. P1).

Comme indiqué par la suite, les actions pouvant être mises en oeuvres sont variées et peuvent comprendre notamment l'installation, l'activation ou la désactivation d'un profil de communication dans un domaine de sécurité secondaire SSD1 ou SSD2.

Le module PSM est apte à recevoir, depuis le serveur distant SM-SR des requêtes de gestion de profil de communication qu'il transmet au module de gestion de profil MGP. Ce module MGP est configuré pour réaliser la gestion d'un ou plusieurs profils de communication (existants ou à venir) dans la carte eUICC à partir d'un ensemble RL d'au moins une règle contenu en mémoire dans la carte eUICC. Pour ce faire, le module MGP est apte à consulter les règles RL afin de déterminer celle(s) étant applicable(s) en réponse à une requête de gestion de profil de communication reçue depuis le serveur SM-SR. Le module MGP est capable de traiter de façon appropriée la requête RQ1 reçue en exécutant une ou plusieurs actions spécifiées par les règles applicables dans l'ensemble RL.

Les règles RL sont par exemple définies par l'utilisateur de la carte eUICC.

Les modules PSM et MGP peuvent le cas échéant correspondre à un seul et même module logiciel implémenté par la carte eUICC.

Le module MGP est en outre capable de communiquer avec un registre de profils de communication PR et un registre d'applications AR, ces registres étant ici tous deux contenus dans la mémoire non volatile MR.

Dans ce mode de réalisation, le registre de profil de communications PR permet d'organiser les profils de communications et leurs applications associées. Ce registre PR prend par exemple la forme d'une base de données et peut comprend par exemple en association au moins deux des éléments suivants :
- un identifiant de profil ICC_ID ;
- un statut indiquant si le profil de communication est actif ou non ;
- un pointeur vers l'adresse mémoire du profil de communication considéré ;
- au moins une adresse mémoire pointant vers une ou plusieurs applications référencées dans le registre d'applications AR ;
- une adresse du serveur SM-DP de l'opérateur MNO associé ;
- des droits d'accès à des services particuliers...

Une fois créé ou installé dans un domaine de sécurité secondaire SSD, chaque profil de communication est référencé dans le registre de profils PR. Le registre de profils PR créée en particulier les adresses mémoires AD dans le registre d'applications AR afin que les applications nécessaires à la gestion du profil associé puissent être invoquées facilement par le module de gestion de profils MGP si besoin.

Dans un mode de réalisation particulier, le module de gestion de profil est configuré pour consulter le registre de profils de communication afin d'obtenir au moins une donnée supplémentaire permettant la mise en oeuvre de la ou des actions spécifiées par les règles applicables dans l'ensemble RL.

Par ailleurs, le serveur SM-SR peut être propre à chaque opérateur mobile MNO ou partagé par plusieurs MNO (comme c'est le cas en **figure 1**). De façon connue, le serveur SM-SR est en charge de gérer les cartes eUICC des utilisateurs de terminaux mobiles et, en particulier, de fournir des informations de souscription nécessaires pour permettre aux utilisateurs d'accéder aux services auxquels ils ont souscrit.

Les opérateurs MNO1 et MNO2 sont chacun aptes à communiquer avec un serveur SM-DP respectif (i.e. SM-DP1 et SM-DP2). De façon connue, ces serveurs SM-DP sont configurés pour assembler et encrypter les informations que les MNO souhaitent fournir à la carte eUICC de l'utilisateur via le serveur SM-SR. En général, ces informations sont encryptées de manière à ce que le serveur SM-SR ne puisse les interpréter. En outre, les opérateurs MNO1 et MNO2 ont ici chacun accès à une base de données respective (DB1 et DB2) contenant chacune des informations de souscription notamment.

Le système d'exploitation OS1, et plus particulièrement le module logiciel MGP, constitue un exemple de programme d'ordinateur au sens de l'invention, ce programme comportant des instructions pour l'exécution des étapes d'un procédé de gestion de profil de communication selon un mode de réalisation particulier de l'invention.

La mémoire dans laquelle se trouve le système d'exploitation OS2 constitue ainsi un exemple de support d'enregistrement au sens de l'invention, lisible par un processeur (non représenté) de la carte eUICC.

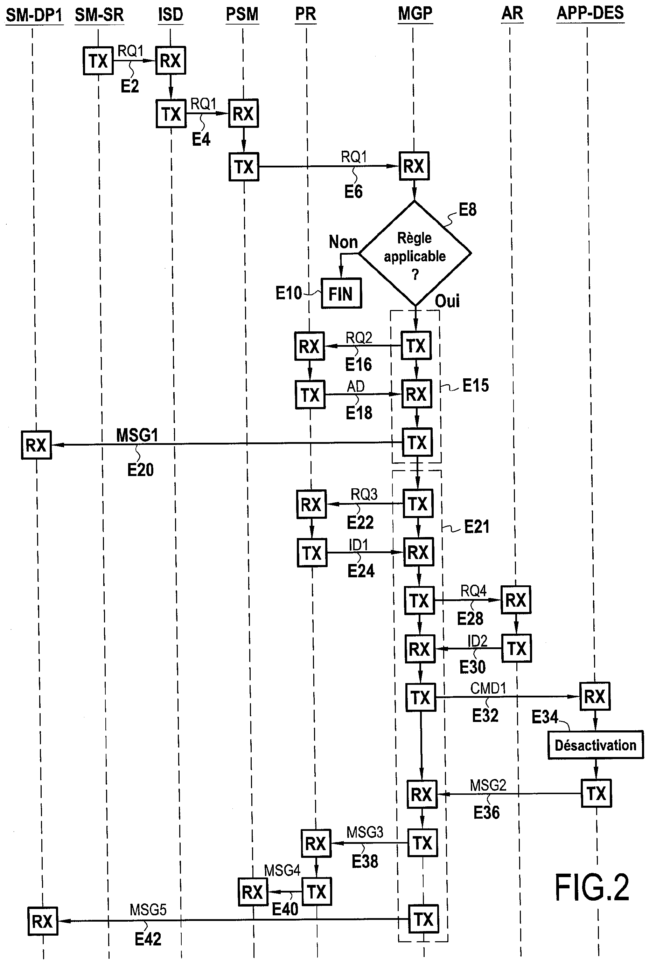

Un mode de réalisation particulier de l'invention mis en oeuvre par la carte eUICC de la **figure 1** est à présent décrit en référence à la **figure 2****.** Plus précisément, la carte eUICC met en oeuvre le procédé de gestion de profil de l'invention en implémentant en particulier le module de gestion de profil MGP.

On envisage à présent le cas où le serveur SM-SR transmet, au cours d'une étape E2, une requête de gestion de profil de communication RQ1 à la carte eUICC. Dans le cas envisagé ici, la requête RQ1 est une requête de désactivation du profil de communication P1, ceci ne constituant qu'un exemple non limitatif de requête de gestion pouvant être traitée par le module MGP.

Dans cet exemple, la requête de gestion RQ1 est reçue par le domaine de sécurité privilégié ISD puis transmise au module logiciel PSM (étape E4). Alternativement, la requête RQ1 peut être reçue directement par le module PSM. Le module PSM constitue un exemple d'un module de réception (ou d'une partie de ce module) au sens de l'invention.

Le module PSM vérifie la requête RQ1 et, si celle-ci est valide, transmet la requête au module de gestion de profil MGP (étape E6).

Au cours d'une étape E8, le module MGP détermine si au moins une règle de l'ensemble RL est applicable en réponse à la requête de gestion RQ1. Si aucune règle de l'ensemble RL n'est applicable, le procédé de gestion prend fin (étape E10). Dans le cas contraire, le module MGP exécute au moins une action spécifiée par la ou les règles applicables notées RL-A, cette action étant associée à un profil de communication (existant ou à venir) de la carte eUICC. L'action spécifiée peut ici concerner le profil P1 ou éventuellement un profil P2 susceptible d'être créé dans le domaine SSD2.

Dans le mode de réalisation décrit ici, le module MGP exécute deux actions spécifiées par la règle applicable RL-A en réponse à la requête RQ1 de désactivation du profil P1, à savoir les actions E15 et E21 relatives toutes deux à la gestion du profil de communication P1. D'autres exemples de requêtes de gestion et d'actions correspondantes sont bien entendus envisageables comme expliqué par la suite.

Plus spécifiquement, le module MGP entreprend tout d'abord d'informer un serveur de l'opérateur MNO1 concerné, par exemple le serveur SM-DP1 comme représenté ici en **figure 2****,** que le profil P1 actuellement actif est sur le point d'être désactivé (étape E15). Pour ce faire, le module MGP envoie (E16) ici toute d'abord une requête RQ2 au registre de profils PR. En réponse, le module MGP reçoit (E18) l'adresse AD du serveur SM-DP associé au profil faisant l'objet du traitement en cours (c'est-à-dire l'adresse du serveur SM-DP1 associé à P1 dans cet exemple). En consultant le registre de profils PR, le module MGP est capable de vérifier que le profil P1 est bien référencé dans ledit registre de profils PR.

Le module MGP envoie ensuite (E20) un message MSG1 au serveur SM-DP1 afin d'informer ce dernier que le profil P1 est sur le point d'être désactivé.

Ce message MSG1 est une notification de désactivation envoyée au serveur distant SM-DP1 via par exemple un message de type « *Short Message Service* » (SMS) ou « *Unstructured supplementary Service Data* » (USSD), ou via un message fondé sur le protocole « *Hypertext Transfert* », « *Card Application Toolkit Transfert Protocol* » (HTTPs/CAT TP) ou « *Bearer Independent Protocol* » (BIP). Des notifications portant sur d'autres évènements peuvent bien entendu être envoyées sur commande du module MGP en utilisant les technologies indiquées ci-dessus.

Informer à l'avance le serveur SM-DP1 de la désactivation imminente du profil P1 (ou d'un autre évènement imminent en lien avec le profil P1) est avantageux en ce que cela permet en particulier à l'opérateur MNO1 correspondant de déclencher des opérations de gestion nécessaires relatives au profil P1 (comme par exemple déclencher la suppression d'informations critiques contenues dans le profil P1 telles que des clés cryptographiques, des algorithmes etc.), si besoin avant la désactivation effective du profil P1.

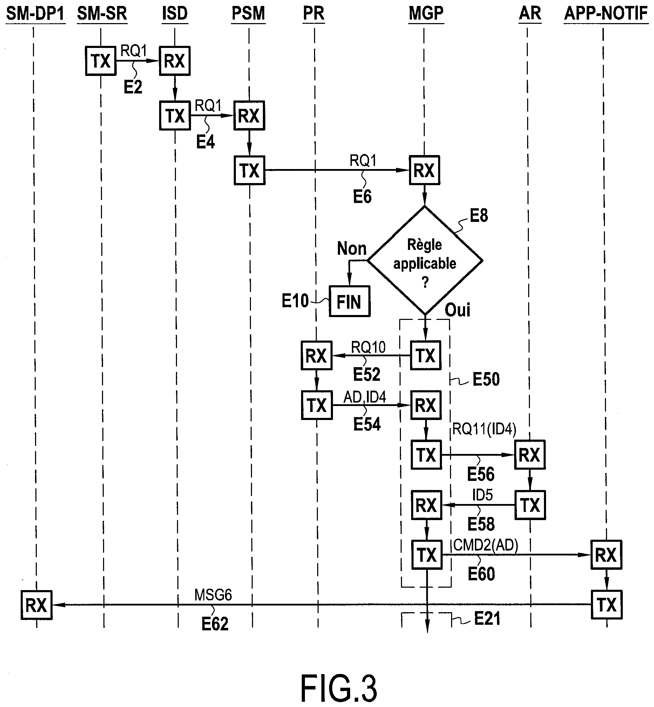

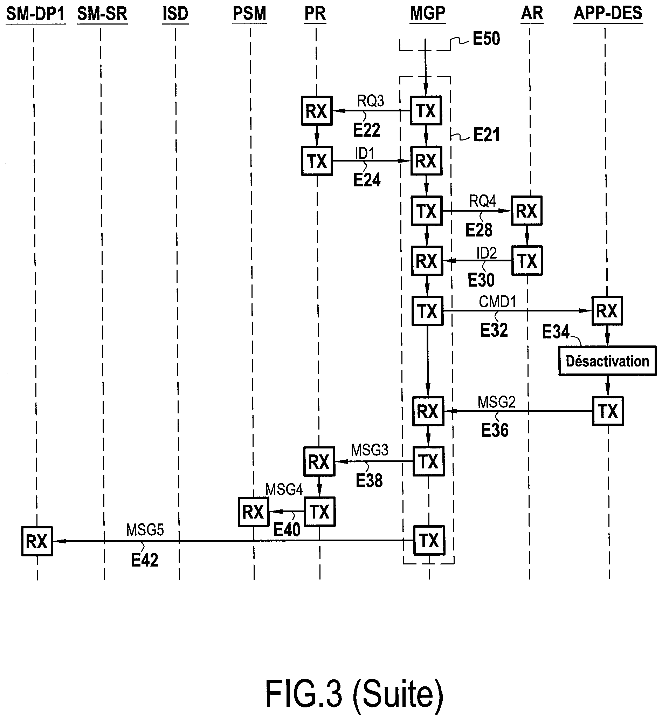

Comme expliqué par la suite en référence à la **figure 3****,** d'autres manières peuvent être envisagées pour permettre au module MGP d'avertir le serveur SM-DP1 de la désactivation imminente du profil P1.

Toujours en référence à la **figure 2****,** le module de gestion de profil MGP déclenche en outre au cours de l'étape E21 la désactivation du profil P1 conformément à la requête de gestion RQ1. Pour ce faire, le module MGP envoie (E22) une requête RQ3 au registre de profils PR. En retour, le module MGP reçoit (E24) en provenance du registre de profils PR un identifiant ID1 d'une application APP-DES à déclencher, à savoir l'application destinée à désactiver le profil P1.

Le module MGP envoie (E28) ensuite une requête RQ4 contenant l'identifiant ID1 au registre d'applications AR. En réponse, le module MGP reçoit (E30) du registre d'applications AR une donnée ID2 permettant de déclencher l'exécution de l'application de désactivation APP-DES. Cette donnée ID2 peut comprendre par exemple une adresse mémoire et/ou tous autres paramètres appropriés.

Ainsi, au cours d'une étape E32, le module de gestion de profils MGP envoie (E32) une commande CMD1 à l'application de désactivation APP-DES afin de commander à celle-ci de désactiver le profil de communication P1 dans la carte eUICC. La commande CMD1 peut comprendre à cet effet un identifiant du profil P1 à désactiver.

Une fois le profil P1 désactivé (E34), le module de gestion de profils MGP reçoit (E36) de l'application APP-DES une notification MSG2 indiquant que la désactivation du profil P1 a été réalisée.

Dans ce mode de réalisation, le module MGP informe (E38) alors le registre de profils PR, au moyen d'une notification MSG3, que le profil P1 a été désactivé. De cette manière, le registre de profils PR peut par exemple mettre à jour le statut actif/inactif du profil P1 en question.

Toujours dans cet exemple, le registre de profils envoie (E40) également un message MSG4 au module logiciel PSM afin d'informer ce dernier que le profil P1 a été désactivé.

De façon facultative, le module MGP peut en outre envoyer (E42) un message MSG5 au serveur distant SM-DP1 afin d'informer ce dernier que le profil P1 est à présent inactif. Pour ce faire, les mêmes technologies que celles évoquées ci-avant pour le message MSG1 peuvent être utilisées.

La **figure 3** représente une variante du mode de réalisation décrit en référence à la **figure 2****.** En **figure 3****,** les étapes E2 à E10 sont réalisées de la même manière que dans la **figure 2****.** En revanche, en cas de résultat positif à l'étape de détermination E8, le module MGP réalise l'étape E50 au lieu de l'étape E15 précédemment décrite. Autrement dit, l'action réalisée à l'étape E50 conformément à la règle applicable diffère de l'action E15 précédemment décrite en référence à la **figure 2****.**

En substance, au cours de cette étape E50, le module MGP envoie (E52) une requête RQ10 au registre de profils PR. En retour, le module MGP reçoit (E54), en provenance du registre de profils PR, l'adresse AD du serveur distant SM-DP1 ainsi que l'identifiant ID4 d'une application de notification APP-NOTIF à invoquer pour prévenir le serveur distant SM-DP1 de la désactivation imminente du profil P1.

Le module MGP envoie (E56) ainsi une requête RQ11 contenant l'identifiant ID4 au registre des applications AR. En retour, le module MGP reçoit depuis ledit registre AR une donnée ID5 permettant au module MGP de déclencher l'exécution de l'application de notification APP-NOTIF. Cette donnée ID4 peut comprendre par exemple une adresse mémoire.

Le module MGP envoie (E60) alors, à l'application APP-NOTIF, une commande CMD2 contenant l'adresse AD du serveur distant DM-DP1 afin de déclencher l'envoi (E62) par l'application APP-NOTIF d'une notification MSG6 pour informer le serveur SM-DP1 (et par conséquent l'opérateur MNO1) que le profil de communication P1 est sur le point d'être désactivé. L'envoi de MSG6 peut par exemple mettre en oeuvre les mêmes technologies que celles évoquées ci-avant pour l'envoi du message MSG1.

Comme déjà indiqué en référence à la **figure 2****,** il n'est pas obligatoire que le serveur représenté sous l'appellation SM-SP1 en **figure 3** soit de type SM-DP1.

Le module MGP réalise ensuite l'étape E21 comme décrit précédemment en référence à la **figure 2****.**

La présente variante diffère donc du mode de réalisation décrit en **figure 2** en ce que le module MGP fait ici appel à une application de notification appropriée APP-NOTIF pour informer le serveur SM-DP1 de l'imminence de la désactivation du profil P1. Dans tous les cas, le module MGP est apte à déclencher l'envoi d'une notification au serveur distant SM-DP approprié en utilisant l'adresse reçue depuis le registre de profils PR.

De nombreuses variantes des modes de réalisation représentées en **figure 2** et **3** sont naturellement envisageables. Notamment, les notifications MSG1 et MSG6 envoyées respectivement aux étapes E20 et E62 peuvent en outre déclencher diverses fonctions selon la configuration souhaitée. Selon une variante particulière, la règle applicable RL-A peut spécifier que chacun des messages E20 et E62 comprend un paramètre (par exemple de type MSISDN) qui permet, lorsqu'il est reçu par l'opérateur MNO concerné, de déclencher un mécanisme de transfert d'appel (ou « call forwarding » en anglais) auprès de celui-ci. En pratique, une telle fonction de transfert d'appel vise à permettre à un utilisateur d'être contacté sur un premier numéro de téléphone associé à un premier profil de communication lorsque ce profil est désactivé. Plus précisément, lorsque la règle RL-A appliquée déclenche la mise en oeuvre de la fonction « call forwarding », la carte eUICC (et plus particulièrement le module de gestion de profil MGP) transmet un message au MNO associé au profil sur le point d'être désactivé (MNO1 dans le cas présent). Ce message informe le MNO que les appels à destination d'un premier numéro de téléphone associé au profil à désactiver doivent être redirigés vers un deuxième numéro de téléphone associé à un autre opérateur. Sur réception d'un appel à destination du premier numéro de téléphone, l'opérateur associé au profil à désactiver transfère ainsi l'appel vers le réseau de l'autre opérateur concerné.

Comme expliqué précédemment, le module de gestion de profils selon l'invention ne se limite pas au traitement de requêtes de désactivation de profils. Le module de gestion de profil est plus généralement apte à réaliser au moins une action prédéfinie en association avec un profil de communication (existant ou à venir dans la carte eUICC), cette action étant spécifiée dans une règle applicable parmi un ensemble RL d'au moins une règle. L'action prédéfinie à réaliser peut viser par exemple l'activation ou la désactivation d'un profil, le basculement (permanent ou temporaire) d'un premier vers un deuxième profil, la suppression d'un profil ou de toutes ou partie des données associées à un profil, ou encore la notification à un serveur d'un évènement particulier (tel que l'une au moins des actions précitées).

Ci-dessous sont présentés des exemples de règles définissant une action lorsqu'une condition particulière est satisfaite :
- si l'utilisation du profil de communication P actuellement actif présente un coût (en termes par exemples de qualité de service) au-delà d'une certaine limite dans la zone géographique dans laquelle se trouve le terminal T → déclenchement d'un basculement vers un profil de communication plus adapté ;
- si le profil de communication actuellement actif ne satisfait pas à une certaine qualité de service → déclenchement du basculement vers un profil de communication plus adapté ;
- les requêtes de désactivation provenant d'un serveur SM-DP particulier sont interdites ou autorisées ;
- si une requête de désactivation est reçue depuis un serveur SM-DP particulier → envoi d'un message avec un donnée spécifique USSD ;
- si une requête de désactivation est reçue depuis un serveur SM-DP particulier → suppression de toutes les données, applications et/ou fichiers associés au profil qui est sur le point d'être désactivé ;
- si une requête de basculement de profil est reçue depuis un serveur SM-DP particulier → réalisation d'une opération de gestion de fichiers (e.g. supprimer des données sensibles telle que des clés cryptographiques de fichiers particuliers) ;
- si une requête de basculement de profil est reçue depuis un serveur SM-DP particulier → désactivation des applications qui sont associées au profil désactivé ;
- si une requête de basculement de profil est reçue depuis un serveur SM-DP particulier → déclenchement d'un délai d'attente entre le basculement du premier vers le deuxième profil afin de permettre l'exécution de fonctions supplémentaires (e.g. suppression de certaines données, envoi d'un message, mise à jour du registre d'applications AR...) ;
- etc.

Dans un mode de réalisation particulier, ladite au moins une action spécifiée par la règle applicable par le module MGP comprend au moins l'un parmi :
- le déclenchement d'un basculement du profil de communication actif vers un second profil de communication déterminé (distinct du profil actuellement actif) ;
- le déclenchement de la désactivation du profil de communication actif ;
- le déclenchement de l'activation d'un second profil de communication (distinct du profil actuellement actif) ;
- la suppression de toutes ou partie des données du profil de communication actif (ces données se trouvant dans une mémoire non volatile du module d'identité de souscripteur) ;
- le déclenchement de la désactivation d'au moins une fonction du profil de communication actif, ladite au moins une fonction comprend au moins l'une parmi une application de paiement sans contact et une application d'accès à des transports ;
- le déclenchement d'un minuteur afin d'induire un délai d'attente déterminé entre la réception de ladite requête de gestion dudit profil, et la mise en oeuvre d'une partie au moins de ladite au moins une action ; et
- la notification à un serveur distant de la mise en oeuvre d'une action, par exemple une action de chargement, d'activation, de désactivation ou de suppression d'un profil de communication ou de toutes ou partie des données d'un profil de communication.

De manière générale, la présente invention permet donc d'optimiser la gestion de profils de communication dans un élément sécurisé tel qu'un module d'identité de souscripteur embarqué à partir d'un ensemble d'au moins une règle susceptible d'être applicable par le module de gestion de profils. La présente invention offre une grande flexibilité dans la gestion des profils en fonction d'évènements détectés par l'élément sécurisé comme notamment des requêtes reçues en provenance d'opérateurs de téléphonique mobile.

L'homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Module d'identité de souscripteur embarqué (eUICC) apte à coopérer avec un dispositif de communication (T), le module d'identité de souscripteur embarqué comprenant :
- au moins un profil de communication (P1) configuré pour permettre au module d'identité de souscripteur embarqué (eUICC) de communiquer, via le dispositif de communication, avec un réseau de téléphonie mobile (R) lorsque ledit profil de communication est actif ;
- un module de réception (PSM) apte à recevoir, depuis un premier serveur distant (SM-SR) dudit réseau de téléphonie mobile, une requête de gestion de profil de communication ; et
- un module de gestion de profil (MGP) configuré pour :
∘ à réception de ladite requête de gestion, déterminer si au moins une règle est applicable parmi un ensemble prédéfini (RL) d'au moins une règle contenu en mémoire dans ledit module d'identité de souscripteur embarqué ;
∘ et, dans l'affirmative, exécuter au moins une action spécifiée par ladite règle applicable en association avec un profil de communication dudit module d'identité de souscripteur embarqué (eUICC).
dans lequel le module de gestion de profil (MGP) est configuré pour consulter une base de données de profils de communication (PR), ladite base de données étant stockée dans une mémoire (MR) non-volatile réinscriptible dudit module d'identité de souscripteur embarqué, afin d'obtenir au moins une donnée supplémentaire permettant la mise en oeuvre de ladite au moins une action ;
dans lequel ladite requête de gestion requiert la désactivation du profil de communication actif (P1), le module de gestion de profil (MGP) étant configuré pour :
- déterminer, à partir de ladite base de données de profils de communications (PR), une adresse (AD) d'un second serveur distant (SM-DP1) du réseau de téléphonie associé au profil de communication actif (P1) ; et
- déclencher l'envoi d'une notification (MSG1 ; MSG6) audit second serveur distant (SM-DP1) en utilisant ladite adresse (AD), afin d'informer le second serveur distant de la désactivation imminente du profil de communication.

2. Module d'identité de souscripteur embarqué selon la revendication 1, dans lequel chaque profil de communication (P1) est contenu dans un domaine sécurisé (SSD1, SSD2) dédié dudit module d'identité de souscripteur embarqué.

3. Module d'identité de souscripteur embarqué selon la revendication 1 ou 2, dans lequel ladite au moins une action spécifiée par ladite règle applicable comprend au moins l'un parmi :
- le déclenchement d'un basculement dudit profil de communication actif vers un second profil de communication déterminé ;
- le déclenchement de la désactivation dudit profil de communication actif ;
- le déclenchement de l'activation d'un second profil de communication ;
- la suppression de tout ou partie des données dudit profil de communication actif, lesdites données étant stockées dans une mémoire non volatile dudit module d'identité de souscripteur ;
- le déclenchement de la désactivation d'au moins une fonction dudit profil de communication actif ;
- le déclenchement d'un minuteur afin d'induire un délai d'attente déterminé entre la réception de ladite requête de gestion dudit profil, et la mise en oeuvre d'une partie au moins de ladite au moins une action ; et
- la notification à un serveur distant de la mise en oeuvre d'une action, par exemple une action de chargement, d'activation, de désactivation ou de suppression d'un profil de communication ou de toutes ou partie des données d'un profil de communication.

4. Module d'identité de souscripteur embarqué selon la revendication 3, dans lequel ladite au moins une fonction comprend au moins l'une parmi une application de paiement sans contact et une application d'accès à des transports.

5. Module d'identité de souscripteur embarqué selon l'une quelconque des revendications 1 à 4, dans lequel ladite base de données de profils (PR) comprend, en association avec chaque profil (P1), au moins l'un parmi : un identifiant d'un profil de communication, un statut indiquant ledit profil de communication comme actif ou non actif, un pointeur vers l'adresse mémoire dudit profil et une adresse du second serveur associé au fournisseur (MNO / SM-SP) dudit profil.

6. Module d'identité de souscripteur embarqué selon l'une quelconque des revendications 1 à 5, dans lequel le module de gestion de profil (MGP) est configuré pour déterminer, à partir de la base de données de profils (PR), une application de notification (APP-NOTIF),
ledit module de gestion de profil étant configuré pour envoyer une commande (CMD2) contenant ladite adresse (AD) à l'application de notification (APP-NOTIF) afin de déclencher l'envoi, par ladite application de notification, de la notification (MSG6) audit second serveur distant.

7. Module d'identité de souscripteur embarqué selon l'une quelconque des revendications 1 à 6, dans lequel la notification est envoyée audit second serveur distant via un message de type « *Short Message Service* » (SMS) ou « *Unstructured Supplementary Service Data* » (USSD), ou via un message fondé sur le protocole « *Hypertext Transfert* », « *Card Application Toolkit Transfert Protocol* » (HTTPs/CAT TP) ou « *Bearer Independent Protocol* » (BIP).

8. Module d'identité de souscripteur embarqué selon l'une quelconque des revendications 1 à 7, dans lequel le premier serveur distant (SM-SR) est un serveur SM-SR dudit réseau de téléphonie (R).

9. Module d'identité de souscripteur embarqué selon l'une quelconque des revendications 1 à 8, dans lequel le dispositif de communication (T) est un terminal de téléphonie mobile.

10. Module d'identité de souscripteur embarqué selon l'une quelconque des revendications 1 à 9, dans lequel le second serveur distant (SM-DP1) est un serveur SM-DP de l'opérateur de téléphonie mobile (MNO1) associé audit profil de communication (P1).

11. Système comprenant un dispositif de communication (T) et module d'identité de souscripteur embarqué (eUICC) conforme à l'une quelconque des revendications 1 à 10, dans lequel le module d'identité de souscripteur embarqué (eUICC) est apte à coopérer avec ledit dispositif de communication (T) pour communiquer avec ledit réseau de communication (R), le dispositif de communication (T) étant un terminal de téléphonie mobile.

12. Procédé de gestion d'un profil de communication mis en oeuvre par un module d'identité de souscripteur embarqué (eUICC) apte à coopérer avec un dispositif de communication (T), le procédé comprenant :
- l'utilisation d'un profil de communication (P1) contenu dans le module d'identité de souscripteur embarqué (eUICC) pour communiquer via le dispositif de communication (T) avec un réseau de téléphonie mobile (R) lorsque ledit profil de communication est actif ;
- la réception d'une requête (RQ1) de gestion de profil de communication depuis un premier serveur distant (SM-SR) dudit réseau de téléphonie mobile ;
- à réception de ladite requête de gestion, la détermination, par un module de gestion de profil (MGP), si au moins une règle est applicable parmi un ensemble prédéfini (RL) d'au moins une règle contenu en mémoire dans ledit module d'identité de souscripteur embarqué (eUICC); et
- dans l'affirmative, l'exécution, par le module de gestion de profil (MGP), d'au moins une action spécifiée par ladite règle applicable en association avec un profil de communication dudit module d'identité de souscripteur embarqué ;
dans lequel ladite requête de gestion requiert la désactivation du profil de communication actif (P1), le procédé comprenant en outre :
- une consultation d'une base de données de profils de communication (PR), ladite base de données étant stockée dans une mémoire (MR) non-volatile réinscriptible dudit module d'identité de souscripteur embarqué, afin d'obtenir au moins une donnée supplémentaire permettant la mise en oeuvre de ladite au moins une action ;
- une détermination, à partir de ladite base de données de profils de communications (PR), d'une adresse (AD) d'un second serveur distant (SM-DP1) du réseau de téléphonie associé au profil de communication actif (P1) ; et
- un déclenchement de l'envoi d'une notification (MSG1 ; MSG6) audit second serveur distant (SM-DP1) en utilisant ladite adresse (AD), afin d'informer le second serveur distant de la désactivation imminente du profil de communication.

13. Procédé de gestion selon la revendication 12, dans lequel chaque profil de communication est contenu dans un domaine sécurisé (SSD1, SSD2) dédié dudit module d'identité de souscripteur embarqué (eUICC).

14. Programme d'ordinateur (OS) comportant des instructions pour l'exécution des étapes d'un procédé de gestion d'un profil de communication selon la revendication 12 ou 13 lorsque ledit programme est exécuté par un processeur.

15. Support d'enregistrement lisible par un processeur sur lequel est enregistré un programme d'ordinateur (OS) comprenant des instructions pour l'exécution des étapes d'un procédé de gestion d'un profil de communication selon la revendication 12 ou 13.

## Patentansprüche

1. Eingebettetes Teilnehmeridentitätsmodul (eUICC), das dazu ausgelegt ist, mit einer Kommunikationsvorrichtung (T) zusammenzuwirken, wobei das eingebettete Teilnehmeridentitätsmodul aufweist:
- mindestens ein Kommunikationsprofil (P1), das dazu konfiguriert ist, dem eingebetteten Teilnehmeridentitätsmodul (eUICC) zu ermöglichen, über die Kommunikationsvorrichtung mit einem Mobiltelefonnetzwerk (R) zu kommunizieren, wenn das Kommunikationsprofil aktiv ist,
- ein Empfangsmodul (PSM), das dazu ausgelegt ist, von einem ersten Remote-Server (SM-SR) des Mobiltelefonnetzwerks eine Verwaltungsanfrage eines Kommunikationsprofils zu empfangen, und
- ein Profilverwaltungsmodul (MGP), das dazu konfiguriert ist:
∘ bei Empfang der Verwaltungsanfrage zu bestimmen, ob mindestens eine Regel aus einem im Speicher in dem eingebetteten Teilnehmeridentitätsmodul enthaltenen vordefinierten Satz (RL) von mindestens einer Regel anwendbar ist,
∘ und, wenn ja, mindestens eine Aktion, die durch die Regel spezifiziert ist, die in Verbindung mit einem Kommunikationsprofil des eingebetteten Teilnehmeridentitätsmoduls (eUICC) anwendbar ist, auszuführen,
wobei das Profilverwaltungsmodul (MGP) dazu konfiguriert ist, eine Datenbank mit Kommunikationsprofilen (PR) abzufragen, wobei die Datenbank in einem wiederbeschreibbaren nichtflüchtigen Speicher (MR) des eingebetteten Teilnehmeridentitätsmoduls gespeichert ist, um mindestens ein zusätzliches Datum zu erhalten, das das Durchführen der mindestens einen Aktion ermöglicht,
wobei die Verwaltungsanfrage das Deaktivieren des aktiven Kommunikationsprofils (P1) erfordert, wobei das Profilverwaltungsmodul (MGP) konfiguriert ist:
- ausgehend von der Datenbank mit Kommunikationsprofilen (PR) eine Adresse (AD) eines zweiten Remote-Servers (SM-DP1) des Telefonnetzwerks zu bestimmen, das dem aktiven Kommunikationsprofil (P1) zugeordnet ist, und
- das Senden einer Benachrichtigung (MSG1; MSG6) an den zweiten Remote-Server (SM-DP1) unter Verwendung der Adresse (AD) auszulösen, um den zweiten Remote-Server über die bevorstehende Deaktivierung des Kommunikationsprofils zu informieren.

2. Eingebettetes Teilnehmeridentitätsmodul gemäß Anspruch 1, wobei jedes Kommunikationsprofil (P1) in einer dedizierten gesicherten Domain (SSD1, SSD2) des eingebetteten Teilnehmeridentitätsmoduls enthalten ist.

3. Eingebettetes Teilnehmeridentitätsmodul gemäß Anspruch 1 oder 2, wobei die mindestens eine Aktion, die durch die anwendbare Regel spezifiziert ist, mindestens eines aufweist von:
- dem Auslösen eines Umschaltens von dem aktiven Kommunikationsprofil zu einem zweiten bestimmten Kommunikationsprofil,
- dem Auslösen des Deaktivierens des aktiven Kommunikationsprofils,
- dem Auslösen des Aktivierens eines zweiten Kommunikationsprofils,
- dem Löschen der gesamten oder eines Teils der Daten des aktiven Kommunikationsprofils, wobei die Daten in einem nichtflüchtigen Speicher des Teilnehmeridentitätsmoduls gespeichert sind,
- dem Auslösen des Deaktivierens von mindestens einer Funktion des aktiven Kommunikationsprofils,
- dem Auslösen eines Timers, um eine bestimmte Wartezeit zwischen dem Empfangen der Verwaltungsanfrage eines Kommunikationsprofils und dem Umsetzen von mindestens einem Teil von der mindestens einen Aktion einzuführen, und
- dem Benachrichtigen eines Remote-Servers über das Umsetzen einer Aktion, beispielsweise einer Aktion des Ladens, des Aktivierens, des Deaktivierens oder des Löschens aller oder eines Teils der Daten eines Kommunikationsprofils.

4. Eingebettetes Teilnehmeridentitätsmodul gemäß Anspruch 3, wobei die mindestens eine Funktion mindestens eine unter einer kontaktlosen Bezahlungsanwendung und einer Zugangsanwendung zu Transporten aufweist.

5. Eingebettetes Teilnehmeridentitätsmodul gemäß einem der Ansprüche 1 bis 4, wobei die Profildatenbank (PR) in Verbindung mit jedem Profil (P1) mindestens eines aufweist von: einer Kennung von einem Kommunikationsprofil, einem Status, der das Kommunikationsprofil als aktiv oder nicht aktiv anzeigt, einem Zeiger auf die Speicheradresse des Profils und einer Adresse des zweiten Servers, der dem Provider (MNO / SM-SP) des Profils zugeordnet ist.

6. Eingebettetes Teilnehmeridentitätsmodul gemäß einem der Ansprüche 1 bis 5, wobei das Profilverwaltungsmodul (MGP) dazu konfiguriert ist, ausgehend von der Profildatenbank (PR) eine Benachrichtigungsanwendung (APP-NOTIF) zu bestimmen, wobei das Profilverwaltungsmodul konfiguriert ist, um einen Befehl (CMD2), der die Adresse (AD) enthält, an die Benachrichtigungsanwendung (APP-NOTIF) zu senden, um das Senden durch die Benachrichtigungsanwendung von der Benachrichtigung (MSG6) zu dem zweiten Remote-Server auszulösen.

7. Eingebettetes Teilnehmeridentitätsmodul gemäß einem der Ansprüche 1 bis 6, wobei die Benachrichtigung an den zweiten Remote-Server über eine Nachricht des Typs "*Short Message Service*" (SMS) oder "*Unstructured Supplementary Service Data*" (USSD) oder über eine Nachricht gesendet wird, die auf dem *"Hypertext Transfer Protocof*"*,* dem "*Card Application Toolkit Transfer Protocol*" (HTIPs/CAT TP) oder dem "*Bearer Independent Protocol*" (BIP) basiert.

8. Eingebautes Teilnehmeridentitätsmodul gemäß einem der Ansprüche 1 bis 7, wobei der erste Remote-Server (SM-SR) ein SM-SR-Server des Telefonnetzwerks (R) ist.

9. Eingebautes Teilnehmeridentitätsmodul gemäß einem der Ansprüche 1 bis 8, wobei die Kommunikationsvorrichtung (T) ein Mobiltelefonendgerät ist.

10. Eingebautes Teilnehmeridentitätsmodul gemäß einem der Ansprüche 1 bis 9, wobei der zweite Remote-Server (SM-DP1) ein SM-DP-Server des Mobilfunkbetreibers (MNO1) ist, der dem Kommunikationsprofil (P1) zugeordnet ist.

11. System, umfassend eine Kommunikationsvorrichtung (T) und ein eingebettetes Teilnehmeridentitätsmodul (eUICC) gemäß einem der Ansprüche 1 bis 10, wobei das eingebettete Teilnehmeridentitätsmodul (eUICC) geeignet ist, um mit der Kommunikationsvorrichtung (T) zusammenzuwirken, um mit dem Kommunikationsnetzwerk (R) zu kommunizieren, wobei die Kommunikationsvorrichtung (T) ein Mobiltelefonendgerät ist.

12. Verfahren zum Verwalten eines Kommunikationsprofils, das von einem eingebetteten Teilnehmeridentitätsmodul (eUICC) umgesetzt wird, das dazu ausgelegt ist, mit einer Kommunikationsvorrichtung (T) zusammenzuwirken, wobei das Verfahren aufweist:
- das Verwenden eines Kommunikationsprofils (P1), das in dem eingebetteten Teilnehmeridentitätsmodul (eUICC) enthalten ist, um über die Kommunikationsvorrichtung (T) mit einem Mobiltelefonnetzwerk (R) zu kommunizieren, wenn das Kommunikationsprofil aktiv ist,
- das Empfangen einer Verwaltungsanfrage (RQ1) eines Kommunikationsprofils von einem ersten Remote-Server (SM-SR) des Mobiltelefonnetzwerks,
- bei Empfang der Verwaltungsanfrage das Bestimmen durch ein Profilverwaltungsmodul (MGP), ob mindestens eine Regel unter einem im Speicher in dem eingebetteten Teilnehmeridentitätsmodul (eUICC) enthaltenen vordefinierten Satz (RL) von mindestens einer Regel anwendbar ist, und,
- wenn ja, das Ausführen durch das Profilverwaltungsmodul (MGP) von mindestens einer Aktion, die durch die Regel spezifiziert ist, die in Verbindung mit einem Kommunikationsprofil des eingebetteten Teilnehmeridentitätsmoduls anwendbar ist,
wobei die Verwaltungsanfrage das Deaktivieren des aktiven Kommunikationsprofils (P1) erfordert, wobei das Verfahren ferner aufweist:
- ein Abfragen einer Datenbank mit Kommunikationsprofilen (PR), wobei die Datenbank in einem wiederbeschreibbaren nichtflüchtigen Speicher (MR) des eingebetteten Teilnehmeridentitätsmoduls gespeichert wird, um mindestens ein zusätzliches Datum zu erhalten, das das Durchführen der mindestens einen Aktion ermöglicht,
- ein Bestimmen ausgehend von der Datenbank mit Kommunikationsprofilen (PR) einer Adresse (AD) eines zweiten Remote-Servers (SM-DP1) des Telefonnetzwerks, das dem aktiven Kommunikationsprofil (P1) zugeordnet wird, und
- ein Auslösen des Sendens einer Benachrichtigung (MSG1; MSG6) an den zweiten Remote-Server (SM-DP1) unter Verwendung der Adresse (AD), um den zweiten Remote-Server über die bevorstehende Deaktivierung des Kommunikationsprofils zu informieren.

13. Verfahren zum Verwalten gemäß Anspruch 12, wobei jedes Kommunikationsprofil in einer dedizierten gesicherten Domain (SSD1, SSD2) des eingebetteten Teilnehmeridentitätsmoduls (eUICC) enthalten ist.

14. Computerprogramm (OS), das Anweisungen für die Ausführung der Schritte eines Verfahrens zum Verwalten eines Kommunikationsprofils gemäß Anspruch 12 oder 13 wenn das Programm von einem Computer ausgeführt wird aufweist.

15. Computerlesbares Aufzeichnungsmedium, auf dem ein Computerprogramm (OS) aufgezeichnet ist, das Anweisungen für die Ausführung der Schritte eines Verfahrens zum Verwalten eines Kommunikationsprofils gemäß Anspruch 12 oder 13 aufweist.

## Claims

1. An embedded subscriber identity module (eUICC) suitable for co-operating with a communication device (T), the embedded subscriber identity module comprising:
- at least one communication profile (P1) configured to allow the embedded subscriber identity module (eUICC) to communicate, via the communication device, with a mobile telephone network (R) when said communication profile is active;
- a reception module (PSM) suitable for receiving, from a first remote server (SM-SR) of said mobile telephone network, a communication profile management request; and
- a profile manager module (MGP) configured:
∘ on receiving said management request, to determine whether at least one rule from a predefined set (RL) of at least one rule contained in memory in said embedded subscriber identity module is applicable; and
∘ if so, to execute at least one action specified by said applicable rule in association with a communication profile of said embedded subscriber identity module (eUICC),
wherein the profile manager module (MGP) is configured to consult a database of communication profiles (PR), said database being stored in a rewritable non-volatile memory (MR) of said embedded subscriber identity module, in order to obtain at least one item of additional data enabling said at least one action to be performed;
wherein said management request requests deactivating the active communication profile (P1), the profile manager module (MGP) being configured to:
- determine, from said database of communications profiles (PR), an address (AD) of a second remote server (SM-DP1) of the telephone network associated with the active communication profile (P1); and
- to trigger sending of a notification (MSG1; MSG6) to said second remote server (SM-DP1) by using said address (AD), in order to inform the second remote server of a forthcoming deactivation of the communication profile.

2. The embedded subscriber identity module according to claim 1, wherein each communication profile (P1) is contained in a dedicated secure domain (SSD1, SSD2) of said embedded subscriber identity module.

3. The embedded subscriber identity module according to claim 1 or 2, wherein said at least one action specified by said applicable rule comprises at least one of the following:
- triggering a changeover from said active communication profile to a determined second communication profile;
- triggering deactivation of said active communication profile;
- triggering activation of a second communication profile;
- deleting some or all of the data of said active communication profile, said data being stored in a non-volatile memory of said subscriber identity module;
- triggering deactivation of at least one function of said active communication profile;
- triggering a timer in order to impose a determined waiting time delay between receiving said management request of said profile, and performing at least part of said at least one action; and
- notifying a remote server of the performance of said at least one action, for example a loading, activation, deactivation, or deletion of a communication profile or of some or all of the data of a communication profile.

4. The embedded subscriber identity module according to claim 3, wherein said at least one function comprises at least one of a contactless payment application and a transport ticket application.

5. The embedded subscriber identity module according to any one of claims 1 to 4, wherein said database of profiles (PR) comprises, in association with each profile (P1), at least one of the following: an identifier of said communication profile, a status indicating whether said communication profile is active or not active, a pointer to the memory address of said profile, and an address of the second server of the provider (MNO / SM-SP) of said profile.

6. The embedded subscriber identity module according to any one of claims 1 to 5, wherein the profile manager module (MGP) is configured to use the database of profiles (PR) to determine a notification application (APP-NOTIF),
said profile manager module being configured to send a command (CMD2) containing said address (AD) to the notification application (APP-NOTIF) in order to cause said notification application to send the notification (MSG6) to said second remote server.

7. The embedded subscriber identity module according to any one of claims 1 to 6, wherein the notification is sent to said second remote server by using a message of the short message service (SMS) type or of the unstructured supplementary service data (USSD) type, or by using a message based on the hypertext transfer, card application toolkit transfer protocol (HTTPs/CAT TP) or on the bearer independent protocol (BIP).

8. The embedded subscriber identity module according to any one of claims 1 to 7, wherein the first remote server (SM-SR) is a SM-SR server of said mobile telephone network (R).

9. The embedded subscriber identity module according to any one of claims 1 to 8, wherein the communication device (T) is a mobile telephone terminal.

10. The embedded subscriber identity module according to any one of claims 1 to 9, wherein the second remote server (SM-DP1) is a SM-DP server of the mobile telephone operator (MNO1) associated with said communication profile (P1).

11. A system comprising a communication device (T) and embedded subscriber identity module (eUICC) according to any one of claims 1 to 10, wherein the embedded subscriber identity module (eUICC) is able to cooperate with said communication device (T) to communicate with said communication network (R), the communication device (T) being a mobile telephone terminal.

12. A method of managing a communication profile performed by an embedded subscriber identity module (eUICC) suitable for co-operating with a communication device (T), the method comprising:
- using a communication profile (P1) contained in the embedded subscriber identity module (eUICC) to communicate via the communication device (T) with a mobile telephone network (R) when said communication profile is active;
- receiving a communication profile management request (RQ1) from a first remote server (SM-SR) of said mobile telephone network;
- on receiving said management request, using a profile manager module (MGP) to determine whether at least one rule from a predefined set (RL) of at least one rule contained in memory in said embedded subscriber identity module (eUICC) is applicable; and
- if so, using the profile manager module (MGP) to execute at least one action specified by said applicable rule in association with a communication profile of said embedded subscriber identity module;
wherein said management requests the deactivation of the active communication profile (P1), the method further comprising:
- consulting a database of communication profiles (PR), said database being stored in a rewritable non-volatile memory (MR) of said embedded subscriber identity module, in order to obtain at least one item of additional data enabling said at least one action to be performed;
- determining, from said database of communications profiles (PR), an address (AD) of a second remote server (SM-DP1) of the telephone network associated with the active communication profile (P1); and
- triggering sending of a notification (MSG1; MSG6) to said second remote server (SM-DP1) by using said address (AD), in order to inform the second remote server of a forthcoming deactivation of the communication profile.

13. The management method according to claim 12, wherein each communication profile is contained in a dedicated secure domain (SSD1, SSD2) of said embedded subscriber identity module (eUICC).

14. A computer program (OS) including instructions for performing steps of a method for managing a communication profile according to claim 12 or 13 when said program is executed by a professor.

15. A processor-readable medium storing a computer program (OS) including instructions for carrying out the steps of a method for managing a communication profile according to claim 12 or 13.
